# FASCICULE DE BREVET EUROPEEN

(11) **EP 2 783 926 B1**
(45) Date de publication et mention de la délivrance du brevet: **03.02.2016**
(21) Numéro de dépôt: 14000759.2
(22) Date de dépôt: 04.03.2014
(51) Int. Cl.: B60S 1/08, B60S 1/48

(54) **Procédé anti-rayure pour parebrise d'un véhicule, et essuie-glace mettant en oeuvre ledit procédé**
Verfahren zur Erhöhung der Kratzfestigkeit der Windschutzscheibe, und Scheibenwischer, der dieses Verfahren umsetzt
Anti-scratch method for a windscreen of a vehicle, and windscreen wiper implementing said method

(30) Priorité: 28.03.2013 FR 1300721
(43) Date de publication de la demande: 01.10.2014
(73) Titulaire: Airbus Helicopters, 13725 Marignane Cedex (FR)
(72) Inventeur: Ayache, David, F-13610 LE PUY Sainte Reparade (FR)
(74) Mandataire: GPI & Associés

(56) Documents cités:
- GB-A- 2 330 922
- US-A1- 2008 229 537
- US-A1- 2009 108 788

## Description

La présente invention concerne d'une part un procédé anti-rayure pour limiter les rayures sur un parebrise d'un véhicule, et d'autre part un essuie-glace mettant en oeuvre ledit procédé. Plus particulièrement, un tel véhicule est un aéronef et notamment un giravion. Le document GB 2 330 922 est considéré comme l'état de la technique le plus proche de l'objet des revendications indépendantes.

En effet, un giravion peut comporter un système de nettoyage muni d'au moins un essuie-glace pour nettoyer un parebrise en conditions de pluie ou de neige par exemple. L'essuie-glace vise alors à octroyer une bonne visibilité au pilote du giravion en balayant le parebrise.

Certains règlements de certification peuvent d'ailleurs imposer la présence d'un système pour essuyer les vitres d'un giravion.

Classiquement, un essuie-glace comporte un système d'entraînement mettant en mouvement un bras muni d'un racleur. Ce racleur représente la partie active de l'essuie-glace qui repousse l'eau ou la neige par contact en balayant le parebrise.

De plus, le système de nettoyage peut comporter un dispositif de lave-glace pour pulvériser un produit nettoyant sur un parebrise.

En outre, un système de nettoyage automatique peut comprendre un détecteur de pluie. En présence de pluie, le système de nettoyage active automatiquement un essuie-glace pour balayer un parebrise.

Ainsi, le système de nettoyage d'un parebrise peut comporter les modes de fonctionnement suivants :
- un mode lave-glace,
- un mode de fonctionnement manuel requérant le balayage immédiat du parebrise avec les essuie-glaces,
- un mode de fonctionnement automatique requérant le balayage du parebrise avec les essuie-glaces en présence d'eau sur le parebrise.

La notion de fonctionnement manuel est connue de l'homme du métier. Selon l'état de la technique, un sélecteur permet de requérir le balayage immédiat d'un essuie-glace, contrairement à un fonctionnement automatique requérant le balayage uniquement lorsque le pare-brise est mouillé.

Le document EP 1012014 propose un dispositif et un procédé pour le fonctionnement d'un détecteur de pluie. Un détecteur de pluie détermine si une vitre est mouillée. Dans l'affirmative, un essuie-glace est commandé pour balayer la vitre.

On connaît par ailleurs des systèmes décomposant la lumière impactant un parebrise en une composante dite « de pluie » et une composante de lumière ambiante. Cette composante de lumière ambiante est alors utilisée pour régler le seuil de détection de pluie afin de limiter l'activation indue d'un essuie-glace.

Les systèmes de nettoyage de parebrise sont efficaces. Cependant, la demanderesse note parfois la présence de rayures sur un parebrise.

Une rayure peut induire une action de maintenance consistant soit à remplacer le parebrise, soit à traiter le parebrise pour lui rendre son aspect originel.

De plus, une rayure peut mettre fin à une mission en vol d'un aéronef en raison d'une moindre sécurité.

On connait aussi les documents GB 2 330 922, US 2009/108788 et US 2008/229537.

Dès lors, la présente invention a alors pour objet d'au moins limiter les rayures apparaissant sur certains parebrises.

Ainsi, l'invention concerne un procédé anti-rayure pour limiter les rayures sur un parebrise d'un véhicule, ce véhicule comprenant au moins un essuie-glace pour balayer le parebrise et un lave-glace.

Ce procédé est notamment remarquable en ce que lorsqu'un fonctionnement manuel de chaque essuie-glace est requis :
- on détermine si le parebrise est sec à l'aide d'un détecteur d'eau, et
- si le parebrise est sec, on pulvérise au préalable un liquide sur le parebrise avec un lave-glace, puis on balaie le parebrise avec chaque essuie-glace, et
- si le parebrise est mouillé, on balaie le parebrise avec chaque essuie-glace sans employer au préalable le lave-glace.

En effet, la demanderesse note que les parebrises sont sensibles aux agressions externes et peuvent se rayer.

Des hélicoptères sont parfois munis d'un parebrise en polycarbonate. Ces parebrises présentent une masse réduite et peuvent être facilement mis en oeuvre. Cependant, ces parebrises peuvent se rayer très facilement.

Ces rayures proviennent notamment d'une utilisation indue d'un essuie-glace provoquant le balayage de l'essuie-glace sur un parebrise sec. Un tel balayage en présence d'un environnement pollué par des corps étrangers de type sable par exemple peut conduire à rayer le parebrise, notamment si l'aéronef évolue dans un environnement chargé en sable.

Dans de telles conditions, l'essuie-glace peut aussi être endommagé.

Les cas de fonctionnement indus sont souvent liés à un déclenchement intempestif du fonctionnement d'un essuie-glace provoqué par un pilote. Par exemple, un pilote peut oublier d'arrêter un essuie-glace suite à un atterrissage. Lors de la mise en route suivante de l'aéronef, l'essuie-glace se déclenche et risque alors de rayer le parebrise.

L'invention a permis de mettre à jour ce problème et d'y remédier.

En effet, l'invention propose d'utiliser le lave-glace durant un fonctionnement manuel, préalablement à l'utilisation d'un essuie-glace. De manière innovante, l'activation du mode de fonctionnement manuel n'entraîne pas un balayage immédiat.

En effet, on détermine si le parebrise est sec. Dans la négative le parebrise est mouillé, et on balaie donc ce parebrise avec les essuie-glaces. Par contre, dans l'affirmative on mouille au préalable le parebrise avec le lave-glace, puis on balaie ce parebrise.

Par suite, ce procédé permet de lubrifier si nécessaire le parebrise pour éviter la création d'une rayure ou une détérioration des essuie-glaces.

Si un pilote laisse un sélecteur sur la position requérant un mode de fonctionnement manuel, on détermine au démarrage de l'aéronef si le parebrise est sec pour activer le cas échéant le lave-glace avant les essuie-glaces.

Ce procédé peut comporter une ou plusieurs des caractéristiques qui suivent.

Ainsi, lorsque le fonctionnement automatique de chaque essuie-glace est requis :
- on détermine si le parebrise est mouillé à l'aide d'un détecteur d'eau, et
- si le parebrise est sec, on ne balaie pas le parebrise avec un essuie-glace, et
- si le parebrise est mouillé, on balaie le parebrise avec chaque essuie-glace sans employer au préalable le lave-glace.

Ce fonctionnement automatique permet aussi d'éviter le nettoyage d'un parebrise sec avec un essuie-glace.

Par ailleurs, lorsque le fonctionnement manuel de chaque essuie-glace est requis, on peut balayer le parebrise avec chaque essuie-glace selon un nombre de cycles prédéterminé.

On entend par nombre de cycles un nombre prédéterminé d'aller-retour effectué par un essuie-glace sur un parebrise, ou encore une durée d'utilisation par exemple. Le nombre de cycles prédéterminés peut dépendre de la vitesse d'avancement de l'aéronef par exemple.

Un constructeur évalue le nombre de cycles prédéterminé pour éviter le balayage d'un parebrise initialement mouillé mais ayant séché au bout d'un certain temps.

Selon un autre aspect, on peut régler la vitesse de balayage d'un essuie-glace, notamment durant un mode de fonctionnement manuel.

En outre, durant un mode de fonctionnement en lave-glace, on pulvérise un liquide à l'aide du lave-glace durant une durée prédéterminée, puis on balaie le parebrise avec chaque essuie-glace.

Contrairement à l'état de la technique, la pulvérisation d'un liquide et le balayage d'un essuie-glace ne sont pas simultané pour éviter le balayage d'une surface sèche.

Par ailleurs, lorsqu'on balaie un parebrise avec un essuie-glace suite à une pulvérisation d'un liquide avec un lave-glace, on peut observer un temps d'attente prédéterminé après l'utilisation du lave-glace avant de balayer le parebrise avec chaque essuie-glace.

Par exemple, on observe ce temps d'attente durant le mode de fonctionnement manuel, ou le mode de fonctionnement en lave-glace.

Le temps d'attente vise à optimiser le mouillage du parebrise, en permettant d'attendre que le liquide pulvérisé se répande sur tout le parebrise.

Outre un procédé, l'invention vise un aéronef appliquant ce procédé.

Cet aéronef est muni d'un parebrise ainsi que d'au moins un essuie-glace pour balayer le parebrise et d'un lave-glace, le lave-glace comprenant au moins une buse pour pulvériser un liquide sur le parebrise.

Cet aéronef comporte aussi :
- un détecteur d'eau pour déterminer si le parebrise est sec,
- un sélecteur muni d'au moins une position manuelle pour requérir un fonctionnement manuel de chaque essuie-glace, et
- une unité de traitement reliée au détecteur d'eau ainsi qu'au lave-glace, à l'essuie-glace et au sélecteur pour réaliser les étapes suivantes lorsqu'un fonctionnement manuel est requis :
   o l'unité de traitement communique avec le détecteur d'eau pour déterminer si le parebrise est sec,
   o si le parebrise est sec, l'unité de traitement envoie un ordre au lave-glace afin de pulvériser un liquide sur le parebrise, puis envoie un ordre à chaque essuie-glace afin de balayer le parebrise avec chaque essuie-glace, et pour
   o si le parebrise est mouillé, l'unité de traitement envoie un ordre à chaque essuie-glace afin de balayer le parebrise avec chaque essuie-glace sans employer au préalable le lave-glace.

Le détecteur d'eau peut être un détecteur d'eau usuel.

En outre, l'unité de traitement peut par exemple comprendre un processeur et une mémoire, le processeur exécutant des instructions de la mémoire pour appliquer le procédé selon l'invention. L'unité de traitement peut aussi par exemple comprendre un circuit électronique logique pour remplir sa fonction.

Cet aéronef peut notamment posséder une ou plusieurs des caractéristiques qui suivent.

Ainsi, le sélecteur peut aussi inclure une position automatique pour requérir un fonctionnement automatique de chaque essuie-glace au cours duquel l'unité de traitement envoie un ordre pour balayer un parebrise avec chaque essuie-glace si le parebrise est mouillé uniquement.

Le sélecteur peut en outre posséder une position d'arrêt.

Par ailleurs, l'aéronef peut comporter un moyen d'activation du lave-glace. Le moyen d'activation peut être relié directement au lave-glace, ou encore communiquer avec le lave-glace au travers de l'unité de traitement.

En outre, l'aéronef peut comporter un moyen de réglage d'une vitesse de balayage de chaque essuie-glace. Le moyen de réglage peut être relié directement à chaque essuie-glace ou encore communiquer avec chaque essuie-glace au travers de l'unité de traitement.

L'invention et ses avantages apparaîtront avec plus de détails dans le cadre de la description qui suit avec des exemples de réalisation donnés à titre illustratif en référence aux figures annexées qui représentent :
- la figure 1, un schéma présentant un aéronef selon l'invention, et
- la figure 2, un graphe explicitant le procédé selon l'invention.

Les éléments présents dans plusieurs figures distinctes sont affectés d'une seule et même référence.

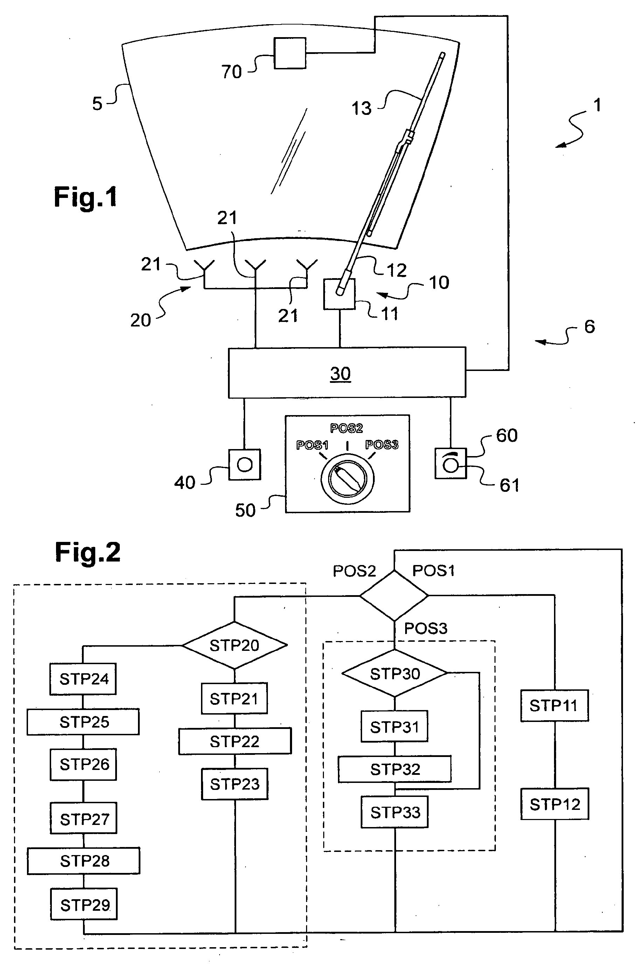

La figure 1 présente un véhicule 1 selon l'invention, et plus particulièrement un aéronef.

Cet aéronef 1 comprend un parebrise 5 ainsi qu'un système de nettoyage 6 de ce parebrise 5. Les autres organes de l'aéronef 1 ne sont pas représentés par commodité pour ne pas alourdir la figure 1.

Le système de nettoyage 6 est muni d'au moins un essuie-glace 10, et plus précisément d'un unique essuie-glace sur la figure 1.

Chaque essuie-glace 10 comporte un bras 12 portant un racleur 13. De plus, l'essuie-glace inclut un dispositif moteur 11 pour mettre en mouvement le bras 12 et le racleur 13. Ainsi, le racleur 13 peut effectuer un mouvement d'aller-retour pour balayer le parebrise 5.

En outre, le système de nettoyage 6 comprend un lave-glace 20 pour projeter un liquide de nettoyage sur le parebrise 5. Le lave-glace possède au moins une buse 21 pour pulvériser le liquide et un réservoir non représenté contenant ce liquide.

Par ailleurs, le système de nettoyage est pourvu d'un détecteur d'eau 70 pour détecter la présence d'eau sur le parebrise 5.

Ce système de nettoyage est en outre muni d'une unité de traitement 30 reliée à chaque essuie-glace 10, au lave-glace 20 et au détecteur d'eau par des liaisons filaires et/ou non filaires.

De plus, le système de nettoyage est équipé d'un sélecteur 50 relié à l'unité de traitement 30 pour permettre à un pilote de choisir un mode de fonctionnement de l'essuie-glace 10. Ce sélecteur inclut une position manuelle POS2 pour requérir le balayage du parebrise, voire une position automatique POS3 pour requérir un balayage du parebrise si le parebrise est mouillé et une position d'arrêt POS1 requérant l'arrêt de l'essuie-glace 10. Un bouton 51 par exemple rotatif permet de choisir un mode de fonctionnement.

Le système de nettoyage peut aussi posséder un moyen d'activation 40 du lave-glace, tel qu'un bouton poussoir par exemple.

De plus, le système de nettoyage peut inclure un moyen de réglage 60 pour permettre le réglage manuel de la vitesse de rotation de l'essuie-glace. Le moyen de réglage comprend par exemple un bouton rotatif.

Cet aéronef 1 permet d'appliquer le procédé selon l'invention explicité par la figure 2.

En positionnant le sélecteur 50 sur la position manuelle POS2, un opérateur requiert le fonctionnement manuel de l'essuie-glace. Plus précisément, l'opérateur requiert le balayage du parebrise.

Contrairement à l'état de la technique, le balayage n'est pas nécessairement immédiat.

En effet, durant une première étape STP20 de décision, on détermine si le parebrise est sec ou mouillé.

Dès lors, l'unité de traitement 30 communique avec le détecteur d'eau 70 pour obtenir cette information. Ainsi, le détecteur d'eau envoie à l'unité de traitement un signal représentant soit un état mouillé du parebrise 5, soit un état sec de ce parebrise 5.

Si le parebrise est mouillé, on balaie le parebrise 5 avec chaque essuie-glace 10. Ainsi, l'unité de traitement 30 envoie un ordre durant une étape STP21 à chaque essuie-glace 10 afin de balayer le parebrise 5 avec chaque essuie-glace 10.

Durant une étape de balayage STP22, l'essuie-glace nettoie alors le parebrise 5 en effectuant des séquences de balayage, chaque séquence correspondant à un aller-retour de l'essuie-glace sur le parebrise 5.

La vitesse de balayage de l'essuie-glace est réglable à l'aide du moyen de réglage 60.

A l'issue d'un nombre de cycles prédéterminés, suivant une étape d'arrêt STP 23, l'unité de traitement commande l'arrêt de l'essuie-glace.

Ce nombre de cycles prédéterminé peut être un nombre de séquences de balayage fixe ou fonction de la vitesse d'avancement du véhicule, ou encore une durée de fonctionnement fixe ou fonction de cette vitesse d'avancement par exemple.

Si le parebrise est sec, on pulvérise dans un premier temps un liquide sur le parebrise 5 avec un lave-glace 20 puis on balaie le parebrise 5 avec chaque essuie-glace 10.

Ainsi, l'unité de traitement 30 envoie un ordre durant une étape STP24 au lave-glace pour mouiller le parebrise 5 avec chaque essuie-glace 10.

Durant une étape de mouillage STP25, le lave-glace asperge le parebrise 5, avec un liquide de nettoyage puisé dans un réservoir, durant un temps prédéterminé pour ne pas vider complétement ce réservoir.

A l'issue de ce temps prédéterminé, l'unité de traitement commande l'arrêt du lave-glace durant une étape d'arrêt STP26.

Dès lors, l'unité de traitement 30 envoie dans un second temps un ordre durant une étape STP27 à chaque essuie-glace 10 afin de balayer le parebrise 5 avec chaque essuie-glace 10. Durant une étape de balayage STP28, l'essuie-glace nettoie le parebrise 5 en effectuant des séquences de balayage. Ensuite et durant une étape d'arrêt STP29, l'unité de traitement commande l'arrêt de l'essuie-glace.

En positionnant le sélecteur 50 sur la position automatique POS3, un opérateur requiert le fonctionnement automatique de l'essuie-glace. Plus précisément, l'opérateur requiert le balayage du parebrise en fonction des conditions de vol.

Durant une étape STP30, l'unité de traitement 30 détermine si le parebrise 5 est mouillé en communiquant avec le détecteur d'eau.

En l'absence d'eau sur le parebrise, l'unité de traitement ne génère aucun ordre de nettoyage du parebrise.

Par contre, si de l'eau mouille le parebrise et durant une étape STP31, l'unité de traitement 30 envoie un ordre à chaque essuie-glace 10 pour requérir le nettoyage du parebrise 5. Durant une étape de balayage STP32, chaque essuie-glace nettoie le parebrise 5. Ensuite et durant une étape d'arrêt STP33, l'unité de traitement commande l'arrêt de chaque essuie-glace.

Enfin, l'unité de traitement requiert l'arrêt du lave-glace et des essuie-glaces selon les étapes STP11 et STP12.

Cependant, indépendamment de la position du sélecteur, l'invention permet néanmoins l'activation du lave-glace à l'aide du moyen d'activation 40.

Un opérateur peut ainsi requérir un mode de fonctionnement en lave-glace en manoeuvrant le moyen d'activation.

Dès lors, on pulvérise un liquide à l'aide du lave-glace 20 durant une durée prédéterminée, puis on balaie le parebrise 5 avec chaque essuie-glace 10.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles.

## Revendications

1. Procédé anti-rayure pour limiter les rayures sur un parebrise (5) d'un véhicule (1), ledit véhicule (1) comprenant au moins un essuie-glace (10) pour balayer le parebrise (5) et un lave-glace (20),
**caractérisé en ce que** lorsqu'un fonctionnement manuel de chaque essuie-glace (10) est requis :
- on détermine si le parebrise (5) est sec à l'aide d'un détecteur d'eau (70), et
- si le parebrise (5) est sec, on pulvérise au préalable un liquide sur le parebrise (5) avec ledit lave-glace (20), puis on balaie le parebrise (5) avec chaque essuie-glace (10), et
- si le parebrise (5) est mouillé, on balaie le parebrise (5) avec chaque essuie-glace (10) sans employer au préalable le lave-glace (20).

2. Procédé selon la revendication 1,
**caractérisé en ce que** lorsque le fonctionnement automatique de chaque essuie-glace (10) est requis :
- on détermine si le parebrise (5) est mouillé à l'aide d'un détecteur d'eau (70), et
- si le parebrise (5) est sec, on ne balaie pas le parebrise (5) avec un essuie-glace (10), et
- si le parebrise (5) est mouillé, on balaie le parebrise (5) avec chaque essuie-glace (10) sans employer au préalable le lave-glace (20).

3. Procédé selon l'une quelconque des revendications 1 à 2,
**caractérisé en ce que** lorsque le fonctionnement manuel de chaque essuie-glace (10) est requis, on balaie le parebrise (5) avec chaque essuie-glace (10) selon un nombre de cycles prédéterminé.

4. Procédé selon l'une quelconque des revendications 1 à 3,
**caractérisé en ce qu'**on règle la vitesse de balayage dudit essuie-glace (10).

5. Procédé selon l'une quelconque des revendications 1 à 4,
**caractérisé en ce que** durant un mode de fonctionnement lave-glace (20), on pulvérise un liquide à l'aide du lave-glace (20) durant une durée prédéterminée, puis on balaie le parebrise (5) avec chaque essuie-glace (10).

6. Procédé selon l'une quelconque des revendications 1 à 5,
**caractérisé en ce que**, lorsqu'on balaie un parebrise (5) avec un essuie-glace (10) suite à une pulvérisation d'un liquide avec un lave-glace (20), on observe un temps d'attente prédéterminé après l'utilisation du lave-glace (20) avant de balayer le parebrise (5) avec chaque essuie-glace (10).

7. Aéronef (1) muni d'un parebrise (5) ainsi que d'au moins un essuie-glace (10) pour balayer le parebrise (5) et d'un lave-glace (20), ledit lave-glace (20) comprenant au moins une buse (21) pour pulvériser un liquide sur ledit parebrise (5)
**caractérisé en ce que** l'aéronef comporte :
- un détecteur d'eau (70) pour déterminer si le parebrise (5) est sec,
- un sélecteur (50) muni d'au moins une position manuelle (POS2) pour requérir un fonctionnement manuel de chaque essuie-glace (10), et
- une unité de traitement (30) reliée au détecteur d'eau (70) ainsi qu'au lave-glace (20), à l'essuie-glace (10) et au sélecteur (50) pour réaliser les étapes suivantes lorsqu'un fonctionnement manuel est requis :
o l'unité de traitement (30) communique avec le détecteur d'eau (70) pour déterminer si le parebrise (5) est sec,
o si le parebrise (5) est sec, l'unité de traitement (30) envoie un ordre au lave-glace (20) afin de pulvériser un liquide sur le parebrise (5), puis envoie un ordre à chaque essuie-glace (10) afin de balayer le parebrise (5) avec chaque essuie-glace (10) et
o si le parebrise (5) est mouillé, l'unité de traitement (30) envoie un ordre à chaque essuie-glace (10) afin de balayer le parebrise (5) avec chaque essuie-glace (10) sans employer au préalable le lave-glace (20).

8. Aéronef selon la revendication 7,
**caractérisé en ce que** ledit sélecteur (50) inclut une position automatique (POS3) pour requérir un fonctionnement automatique de chaque essuie-glace (10) au cours duquel l'unité de traitement (30) envoie un ordre pour balayer un parebrise (5) avec chaque essuie-glace (10) si le parebrise (5) est mouillé uniquement.

9. Aéronef selon l'une quelconque des revendications 7 à 8,
**caractérisé en ce que** ledit aéronef (1) comporte un moyen d'activation (40) du lave-glace (20).

10. Aéronef selon l'une quelconque des revendications 7 à 9,
**caractérisé en ce que** ledit aéronef (1) comporte un moyen de réglage (60) d'une vitesse de balayage de chaque essuie-glace (10).

## Patentansprüche

1. Verfahren zur Erhöhung der Kratzfestigkeit zur Begrenzung von Kratzern auf einer Windschutzscheibe (5) eines Fahrzeugs (1), wobei das Fahrzeug (1) mindestens einen Scheibenwischer (10) zum Wischen der Windschutzscheibe (5) und eine Scheibenwaschanlage (20) aufweist,
**dadurch gekennzeichnet, dass** es während eines manuellen Betriebs eines jeden Scheibenwischers (10) erforderlich ist:
- dass mit Hilfe eines Wasserdetektors (10) bestimmt wird, ob die Windschutzscheibe (5) trocken ist, und
- wenn die Windschutzscheibe (5) trocken ist, dass mit der Scheibenwaschanlage (20) vorher eine Flüssigkeit auf die Windschutzscheibe (5) gesprüht wird, und anschließend die Windschutzscheibe (5) mit jedem Scheibenwischer (10) gewischt wird, und
- wenn die Windschutzscheibe (5) nass ist, dass die Windschutzscheibe (5) mit jedem Scheibenwischer (10) gewischt wird, ohne vorher die Scheibenwaschanlage (20) einzusetzen.

2. Verfahren nach Anspruch 1,
**dadurch gekennzeichnet, dass** es während eines automatischen Betriebs eines jeden Scheibenwischers (10) erforderlich ist:
- dass mit Hilfe eines Wasserdetektors (70) bestimmt wird, ob die Windschutzscheibe (5) nass ist, und
- wenn die Windschutzscheibe (5) trocken ist, dass die Windschutzscheibe (5) nicht mit einem Scheibenwischer (10) gewischt wird, und
- wenn die Windschutzscheibe (5) nass ist, dass die Windschutzscheibe (5) mit jedem Scheibenwischer (10) gewischt wird, ohne vorher die Scheibenwaschanlage (20) einzusetzen.

3. Verfahren nach einem der Ansprüche 1 bis 2,
**dadurch gekennzeichnet, dass**, wenn der manuelle Betrieb eines jeden Scheibenwischers (10) erforderlich ist, die Windschutzscheibe (5) mit jedem Scheibenwischer (10) mit einer vorbestimmten Anzahl von Zyklen gewischt wird.

4. Verfahren nach einem der Ansprüche 1 bis 3,
**dadurch gekennzeichnet, dass** die Wischgeschwindigkeit des Scheibenwischers (10) geregelt ist.

5. Verfahren nach einem der Ansprüche 1 bis 4,
**dadurch gekennzeichnet, dass** während eines Betriebsmodus der Scheibenwaschanlage (20) eine Flüssigkeit während einer vorbestimmten Zeitdauer mit Hilfe der Scheibenwaschanlage (20) versprüht wird und anschließend die Windschutzscheibe (5) mit jedem Scheibenwischer (10) gewischt wird.

6. Verfahren nach einem der Ansprüche 1 bis 5,
**dadurch gekennzeichnet, dass**, wenn man eine Windschutzscheibe (5) mit einem Scheibenwischer (10) nach einem Versprühen einer Flüssigkeit mit einer Scheibenwaschanlage (20) wischt, eine vorbestimmte Wartezeit nach der Anwendung der Scheibenwaschanlage (20) eingehalten wird, bevor die Windschutzscheibe (5) mit jedem Scheibenwischer (10) gewischt wird.

7. Luftfahrzeug (1) mit einer Windschutzscheibe (5) sowie mindestens einem Scheibenwischer (10) zum Wischen der Windschutzscheibe (5) und mit einer Scheibenwaschanlage (20), wobei die Scheibenwaschanlage (20) mindestens eine Düse (21) zum Sprühen einer Flüssigkeit auf die Windschutzscheibe (5) aufweist,
**dadurch gekennzeichnet, dass** das Luftfahrzeug aufweist:
- einen Wasserdetektor (70) zum Bestimmen, ob die Windschutzscheibe (5) trocken ist,
- einen Wahlschalter (50) mit mindestens einer manuellen Stellung (POS2) zum Anfordern eines manuellen Betriebs eines jeden Scheibenwischers (10), und
- eine Verarbeitungseinheit (30), die mit dem Wasserdetektor (70) sowie der Scheibenwaschanlage (20), mit dem Scheibenwischer (10) und mit dem Wahlschalter (50) verbunden ist, um folgende Schritte auszuführen, wenn ein manueller Betrieb verlangt ist:
o die Verarbeitungseinheit (30) kommuniziert mit dem Wasserdetektor (10), um zu bestimmen, ob die Windschutzscheibe (5) trocken ist,
o wenn die Windschutzscheibe (5) trocken ist, sendet die Verarbeitungseinheit (30) einen Befehl an die Scheibenwaschanlage (20) zum Sprühen einer Flüssigkeit auf die Windschutzscheibe (5), und sendet dann einen Befehl an jeden Scheibenwischer (10) zum Wischen der Windschutzscheibe (5) mit jedem Scheibenwischer (10), und
o wenn die Windschutzscheibe (5) nass ist, sendet die Verarbeitungseinheit (30) einen Befehl an jeden Scheibenwischer (10) zum Wischen der Windschutzscheibe (5) mit jedem Scheibenwischer (10), ohne vorher die Scheibenwaschanlage (20) einzusetzen.

8. Luftfahrzeug nach Anspruch 7,
**dadurch gekennzeichnet, dass** der Wahlschalter (5) eine automatische Stellung (POS3) aufweist, um einen automatischen Betrieb eines jeden Scheibenwischers (10) anzufordern, während dem die Verarbeitungseinheit (30) einen Befehl zum Wischen einer Windschutzscheibe (5) mit jedem Scheibenwischer (10) nur sendet, wenn die Windschutzscheibe (5) nass ist.

9. Luftfahrzeug nach einem der Ansprüche 7 bis 8,
**dadurch gekennzeichnet, dass** das Luftfahrzeug (1) ein Betätigungsmittel (40) der Scheibenwaschanlage (20) aufweist.

10. Luftfahrzeug nach einem der Ansprüche 7 bis 9,
**dadurch gekennzeichnet, dass** das Luftfahrzeug (1) ein Mittel (60) zur Regelung einer Wischgeschwindigkeit eines jeden Scheibenwischers (10) aufweist.

## Claims

1. An anti-scratch method for limiting scratches on a windscreen (5) of a vehicle (1), said vehicle (1) comprising at least one windscreen wiper (10) for wiping the windscreen (5) and a windscreen washer (20),
**characterised in that** when manual operation of each windscreen wiper (10) is required:
- it is determined whether the windscreen (5) is dry using a water detector (70), and
- if the windscreen (5) is dry, a liquid is sprayed beforehand onto the windscreen (5) with said windscreen washer (20), then the windscreen (5) is wiped with each windscreen wiper (10), and
- if the windscreen (5) is wet, the windscreen (5) is wiped with each windscreen wiper (10) without using the windscreen washer (20) beforehand.

2. A method according to Claim 1,
**characterised in that** when automatic operation of each windscreen wiper (10) is required:
- it is determined whether the windscreen (5) is wet using a water detector (70), and
- if the windscreen (5) is dry, the windscreen (5) is not wiped with a windscreen wiper (10), and
- if the windscreen (5) is wet, the windscreen (5) is wiped with each windscreen wiper (10) without using the windscreen washer (20) beforehand.

3. A method according to any one of Claims 1 to 2,
**characterised in that** when manual operation of each windscreen wiper (10) is required, the windscreen (5) is wiped with each windscreen wiper (10) in a predetermined number of cycles.

4. A method according to any one of Claims 1 to 3,
**characterised in that** the wiping speed of said windscreen wiper (10) is controlled.

5. A method according to any one of Claims 1 to 4,
**characterised in that** during a windscreen washer (20) operating mode, a liquid is sprayed for a predetermined duration using the windscreen washer (20), then the windscreen (5) is wiped with each windscreen wiper (10).

6. A method according to any one of Claims 1 to 5,
**characterised in that** when a windscreen (5) is wiped with a windscreen wiper (10) following the spraying of a liquid with a windscreen washer (20), a predetermined waiting time is observed after the windscreen washer (20) has been used before the windscreen (5) is wiped with each windscreen wiper (10).

7. An aircraft (1) provided with a windscreen (5) and also at least one windscreen wiper (10) for wiping the windscreen (5) and a windscreen washer (20), said windscreen washer (20) comprising at least one nozzle (21) for spraying a liquid onto said windscreen (5),
**characterised in that** the aircraft comprises:
- a water detector (70) to determine whether the windscreen (5) is dry,
- a selector (50) provided with at least one manual position (POS2) for requiring manual operation of each windscreen wiper (10), and
- a processing unit (30) connected to the water detector (70) and also to the windscreen washer (20), to the windscreen wiper (10) and to the selector (50) to carry out the following steps when manual operation is required:
• the processing unit (30) communicates with the water detector (70) to determine whether the windscreen (5) is dry,
• if the windscreen (5) is dry, the processing unit (30) sends a command to the windscreen washer (20) in order to spray a liquid onto the windscreen (5), then sends a command to each windscreen wiper (10) in order to wipe the windscreen (5) with each windscreen wiper (10), and
• if the windscreen (5) is wet, the processing unit (30) sends a command to each windscreen wiper (10) in order to wipe the windscreen (5) with each windscreen wiper (10) without using the windscreen washer (20) beforehand.

8. An aircraft according to Claim 7,
**characterised in that** said selector (50) includes an automatic position (POS3) for requiring automatic operation of each windscreen wiper (10) during which the processing unit (30) sends a command to wipe a windscreen (5) with each windscreen wiper (10) solely if the windscreen (5) is wet.

9. An aircraft according to any one of Claims 7 to 8,
**characterised in that** said aircraft (1) comprises a means (40) for activating the windscreen washer (20).

10. An aircraft according to any one of Claims 7 to 9,
**characterised in that** said aircraft (1) comprises a means (60) for controlling a wiping speed of each windscreen wiper (10).
